# EUROPÄISCHE PATENTSCHRIFT

(11) **EP 2 100 051 B1**
(45) Veröffentlichungstag und Bekanntmachung des Hinweises auf die Patenterteilung: **23.09.2015**
(21) Anmeldenummer: 08701251.4
(22) Anmeldetag: 04.01.2008
(51) Int. Cl.: F16D 65/12

(54) **BREMSSCHEIBE FÜR EINE SCHEIBENBREMSE**
BRAKE DISK FOR A DISK BRAKE
DISQUE DE FREIN POUR UN FREIN À DISQUE

(30) Priorität: 10.01.2007 DE 102007001567
(43) Veröffentlichungstag der Anmeldung: 16.09.2009
(73) Patentinhaber: Fritz Winter Eisengiesserei GmbH & Co. KG, 35260 Stadtallendorf (DE)
(72) Erfinder: BECKER, Reiner, 35466 Rabenau (DE)
(74) Vertreter: Cohausz & Florack
(86) Internationale Anmeldenummer: PCT/EP2008/050071
(87) Internationale Veröffentlichungsnummer: WO 2008/084015

(56) Entgegenhaltungen:
- EP-A- 1 227 261
- WO-A-03/012310
- WO-A-2005/054704
- DE-A- 19 839 844
- DE-A1- 2 235 627
- DE-A1- 10 322 454
- US-B1- 6 446 765

## Beschreibung

Die Erfindung betrifft eine Bremsscheibe für eine Scheibenbremse, welche insbesondere zum Einsatz an Kraftfahrzeugen bestimmt ist und die mit einem Reibring als ersten Verbindungspartner und einem Trägerteil als zweiten Verbindungspartner ausgestattet ist, wobei die Verbindungspartner über radial ausgerichtete Vorsprünge drehfest miteinander verbunden sind, die einstückig an einen der Verbindungspartner angeformt sind und formschlüssig in korrespondierend geformte Ausnehmungen des jeweils anderen Verbindungspartners greifen.

Bremsscheiben der voranstehend genannten Art sind beispielsweise aus der WO 03/012310 A, der WO 2005/054704 A, der EP 1 227 261 A, der DE 22 35 627 A, der DE 100 60 262 A1 oder der WO 2006/046258 A1 bekannt.

Darüber hinaus ist aus der DE 198 39 844 A1 eine Bremsscheibe bekannt, bei der über den eingangs angegebenen Stand der Technik hinausgehend an den Reibring angeformte Vorsprünge jeweils einen Durchgangskanal aufweisen. Die Vorsprünge greifen dabei in korrespondierende Ausnehmungen des Trägerteils, so dass der Reibring und das Tragteil als Verbindungspartner drehfest miteinander verbunden sind. In dem Reibring sind dabei Belüftungskanäle ausgebildet, über die im praktischen Betrieb Umgebungsluft aus oder in die Durchgangskanäle der Vorsprünge geleitet wird.

Die bei den in den drei letztgenannten Dokumenten beschriebenen Bremsscheiben vorgesehene im Wesentlichen rein formschlüssige Verbindung zwischen dem Tragteil und dem Reibring über die Verbindungselemente "Vorsprungs / Ausnehmung" erlaubt die Ausdehnung des Reibrings bei einer Erwärmung, zu der es beim Bremsvörgang in Folge der Umwandlung von kinetischer Energie in Reibung kommt.

Die in radialer Richtung erfolgende Ausdehnung des Reibrings lässt sich zum einen dadurch ermöglichten, dass an das Trägerteil in radialer Richtung von dem Trägerteil abstehende zapfenartige Vorsprünge angegossen sind, die in entsprechend geformte Aufnahmen des Reibrings formschlüssig eingreifen. Ebenso können aber auch im Sinne einer kinematischen Umkehr dieser Möglichkeit entsprechende Zapfen an den Reibring angegossen werden, die in korrespondierende Ausnehmungen am Trägerteil greifen.

Die Seitenflächen der Bremsscheibe dienen üblicherweise als Reibflächen für die Bremsbeläge der Scheibenbremse, die mit hohem Druck gegen den Reibring gedrückt werden. Das Trägerteil dagegen stellt die Verbindung zum jeweils abzubremsenden Bauteil, beispielsweise dem jeweiligen Rad eines PKW's oder eines LKW's her.

Mit Bremsscheiben der eingangs angegebenen Art ausgerüstete Scheibenbremsanlagen werden insbesondere in leistungsfähigen Personenkraftfahrzeugen oder Nutzfahrzeugen eingesetzt, bei denen im Zuge eines Bremsvorgangs jeweils hohe kinetische Energien in Reibungswärme umgesetzt werden müssen. Die mit dem Bremsvorgang somit unvermeidbar einhergehende Erwärmung und die aufgrund von Restriktionen bei der Baugröße und des Gewichts in der Regel nur begrenzt mögliche Wärmeabfuhr führt dazu, dass die Reibringe sehr heiß werden mit der Folge, dass sie sich entsprechend stark ausdehnen. Indem der Reibring so mit dem Trägerteil verbunden ist, dass er sich unabhängig vom Trägerteil in radialer Richtung im Wesentlichen ungehindert ausdehnen kann, wird folglich die Gefahr der Entstehung von Rissen minimiert, zu denen es andernfalls durch sich bei einer Erwärmung des Reibrings einstellenden hohen inneren Spannungen kommen kann.

Ein weiterer Vorteil von Bremsscheiben der in Rede stehenden Art ist, dass sie sich mit relativ geringem Aufwand gießtechnisch herstellen lassen. So kann beispielsweise der Reibring mit den daran angeformten Vorsprüngen gießtechnisch vorproduziert und erforderlichenfalls spanend nachbearbeitet werden. Anschließend lässt sich das Tragteil an den Reibring angießen. Als Gussmaterial für den Reibring hat sich dabei Eisenguss bewährt, der in der Lage ist, hohe thermische und mechanische Belastungen aufzunehmen.

Indem das Tragteil aus Aluminium hergestellt ist, lassen sich dagegen erhebliche Gewichtseinsparungen erzielen (WO 2006/046258 A1).

Um die Genauigkeit der Verbindung zwischen Reibring und Tragteil bei Bremsscheiben der in Rede stehenden Art zu verbessern, ist beispielsweise in der DE 102 27 529 A1 vorgeschlagen worden, in das Tragteil von diesem in radialer Richtung abstehende Bolzen einzugießen, die mit ihren freien Endabschnitten in im Reibring ausgebildete Ausnehmungen greifen. In jede der Ausnehmung ist dabei jeweils eine Hülse eingegossen, in der der Endabschnitt des ihr zugeordneten Bolzens in radialer Richtung der jeweiligen Bremsscheibe beweglich sitzt. Praktische Erfahrungen zeigen jedoch, dass der mit der Herstellung von solchen Bremsscheiben verbundene Aufwand erheblich ist. Daher können derartige Bremsscheiben nur zu einem sehr hohen Preis angeboten werden.

Vor dem Hintergrund des voranstehend zusammengefassten Standes der Technik lag der Erfindung die Aufgabe zugrunde, eine Bremsscheibe zu schaffen, die sich kostengünstig herstellen lässt, eine hohe Betriebssicherheit gewährleistet und gleichzeitig ein optimiertes Verhalten unter dem Einfluss der bei einem Bremsvorgang unvermeidbar entstehenden Wärme zeigt.

Diese Aufgabe ist erfindungsgemäß durch die Lehre des Anspruchs 1 gelöst worden. In den auf Anspruch 1 rückbezogenen Ansprüchen sind vorteilhafte Ausgestaltungen der Erfindung angegeben.

Die Erfindung geht davon aus, dass, wie beim Stand der Technik, an den Reibring oder das Tragteil Vorsprünge angegossen werden. Über die in entsprechende Ausnehmungen des jeweils anderen der Verbindungspartner "Tragteil" / "Reibring" eingreifenden Vorsprünge erfolgt dann wie beim Stand der Technik eine weitestgehend rein formschlüssige Verkopplung von Reibring und Tragteil, durch die sich der Reibring bei Erwärmung in radialer Richtung im Wesentlichen ungehindert ausdehnen kann.

Gegenüber konventionell gestalteten Bremsscheiben zeichnet sich eine erfindungsgemäße Bremsscheibe nun dadurch aus, dass mindestens in einen der Vorsprünge ein Durchgangskanal eingeformt ist, wobei im Reibring selbst ein Belüftungskanal vorhanden ist, über den durch den jeweiligen Durchgangskanal der Vorsprünge einströmende Luft abgeleitet bzw. über den Luft in den jeweiligen Durchströmkanal gelangen kann.

In dem Fall, dass die Vorsprünge dem Reibring zugeordnet sind, kann der in die Vorsprünge eingeformte Durchgangskanal unterbrechungsfrei in den im Reibring vorgesehenen Belüftungskanal übergehen. Der im Reibring vorhandene Belüftungskanal stellt dann eine einfache Verlängerung des Durchgangskanals des jeweiligen Vorsprungs dar.

Bei einer erfindungsgemäßen Bremsscheibe kann folglich kühlende Luft auch durch die Bereiche strömen, in denen Tragteil und Reibring unmittelbar miteinander verkoppelt sind. In den im praktischen Einsatz besonders hoch belasteten Abschnitten der erfindungsgemäßen Bremsscheibe ist somit ein laufender Abtransport überschüssiger Wärme sichergestellt und die Gefahr von Spannungsrissen in Folge von Überhitzung dementsprechend minimiert. Gleichzeitig lässt sich eine erfindungsgemäße Bremsscheibe auf einfache Weise gießtechnisch herstellen, da.die jeweiligen Vorsprünge in einem Zuge mit dem jeweiligen Reibring oder Tragteil gegossen werden können. Durch die einstückige Verbindung zwischen den Vorsprüngen und dem jeweiligen Verbindungspartner ist darüber hinaus sichergestellt, dass auch unter ungünstigen Betriebsbedingungen die Verkopplung von Reibring und Tragteil dauerhaft erhalten bleibt.

Letzteres gilt insbesondere deshalb, weil die Ausnehmungen erfindungsgemäß jeweils von einer Buchse umgeben sind, die in den Verbindungspartner eingegossen ist, der die Ausnehmungen aufweist. Durch eine solche Buchse ist sichergestellt, dass die miteinander formschlüssig in Kontakt kommenden Flächen der Bremsscheibe geometrisch einwandfrei ausgerichtet sind.

Eine besonders praxisgerechte Variante einer erfindungsgemäßen Bremsscheiben ist dadurch gekennzeichnet, dass die Vorsprünge an den Reibring angeformt sind. Die Zuordnung der Vorsprünge zum Reibring begünstigt einerseits die ungehinderte radiale Ausdehnung des Reibrings bei Erwärmung. Andererseits kann bei dieser Gestaltung das Tragteil problemlos aus einem Werkstoff gießtechnisch hergestellt werden, der bei deutlich niedrigeren Temperaturen schmilzt als der Werkstoff des Reibrings. So erweist sich die Zuordnung der Vorsprünge zu dem Reibring insbesondere dann als günstig, wenn das Tragteil aus Aluminium- und der Reibring aus Eisengusswerkstoff besteht. Die dann erfindungsgemäß die Ausnehmungen des Tragteils umgebenden Buchsen können dazu dienen, dem Tragteil im Bereich der Ausnehmungen die erforderliche Belastbarkeit zu verleihen.

Eine optimierte Kühlwirkung lässt sich bei einer erfindungsgemäßen Bremsscheibe dadurch erzielen, dass jeder der Vorsprünge einen Durchgangskanal aufweist.

Um eine besonders gute Durchlüftung der jeweils vorhandenen Durchgangskanäle der Vorsprünge zu sichern, ist es günstig, wenn die Ausnehmungen des Tragteils, die den mit den Durchgangskanälen versehenen Vorsprüngen zugeordnet sind, zum Durchleiten von Umgebungsluft mindestens eine Öffnung aufweisen, die mit dem Durchgangskanal der Vorsprünge verbunden ist.

Alternativ oder ergänzend dazu hat es sich als zweckmäßig erwiesen, wenn die Ausnehmungen des Tragteils, die den mit den Durchgangskanälen versehenen Vorsprüngen zugeordnet sind, als Durchbrüche ausgebildet sind. Diese Gestaltung erlaubt es, die Vorsprünge durch die Ausnehmungen hindurch zu führen, so dass bei entsprechender Anordnung der Mündungsöffnung des jeweiligen Durchgangskanals die Umgebungsluft weitestgehend ungehindert in den Durchgangskanal einströmen bzw. aus diesem ausströmen kann. Zu diesem Zweck sollte die freie Länge mindestens der mit den Durchgangskanälen versehenen Vorsprünge derart bemessen sein, dass die betreffenden Vorsprünge durch die Ausnehmungen greifen. Im Hinblick auf den angestrebten Luftein- bzw. Luftaustritt ist es dabei vorteilhaft, wenn die dem Tragteil zugeordnete, auf der freien Stirnseite der Vorsprünge angeordnete Öffnung ihres jeweiligen Durchgangskanals bündig zur vom Reibring abgewandten Öffnung der Ausnehmung angeordnet ist oder sogar über diese hinaussteht.

Gießtechnisch besonders gut herstellen lassen sich die Vorsprünge einer erfindungsgemäßen Bremsscheibe dann, wenn sie nach Art von bolzenartigen Zapfen eine kreisrunde Querschnittsform besitzen. Eine erhöhte Widerstandsfähigkeit gegen die bei einem Bremsvorgang auftretenden mechanischen Belastungen lässt sich allerdings dadurch erzielen, dass die Vorsprünge eine elliptische Querschnittsform aufweisen.

Die Gleichmäßigkeit der Wärmeabfuhr kann bei einfacher Gestaltung der erfindungsgemäßen Bremsscheibe dadurch begünstigt werden, dass die jeweiligen Durchgangskanäle der Vorsprünge koaxial zur Längsachse der Vorsprünge angeordnet sind.

Die Exaktheit der Führung der Vorsprünge in den ihnen jeweils zugeordneten Aufnahmen lässt sich dadurch erforderlichenfalls weiter verbessern, dass die Vorsprünge an ihrem freien Endabschnitt einen Absatz mit einer spanend bearbeiteten Umfangsoberfläche aufweisen. Durch einen solchen nach dem Gießen des mit den Vorsprüngen jeweils ausgestatteten Verbindungspartners durch eine Nachbearbeitung erzeugten Absatz wird eine besonders genaue formschlüssige Führung der Vorsprünge in den ihnen jeweils zugeordneten Ausnehmungen erreicht.

Dies gilt insbesondere dann, wenn das Tragteil aus einem weniger festen, dafür jedoch leichten Werkstoff gefertigt ist, wie beispielsweise einem Leichtmetallwerkstoff, insbesondere Aluminium.

Fertigungstechnisch lässt sich eine erfindungsgemäße Bremsscheibe, deren Reibring aus Eisenguss- und deren Tragteil aus Aluminiumgussmaterial besteht, dann besonders einfach erzeugen, wenn zunächst der Reibring mit den daran angeformten und mit Durchgangskanälen versehenen Vorsprüngen gegossen wird, anschließend die Vorsprünge des Reibrings an ihren freien Enden so bearbeitet werden, dass dort ein Absatz vorhanden ist, dessen Außendurchmesser dem Innendurchmesser der bei fertiger Bremsscheibe die jeweils zugeordnete Ausnehmung umgebenden Buchse entspricht, dann die betreffende Buchse auf den Absatz des jeweiligen Vorsprungs aufgesetzt und schließlich in einer geeigneten Gießform das Tragteil an den Reibring angegossen wird, wobei das Aluminium des Tragteils die Buchsen an ihrem Umfang umschließt, so dass sie form-, stoff- und/oder kraftschlüssig im Tragteil gehalten sind und gleichzeitig nach Art von Durchbrüchen ausgebildete Ausnehmungen bilden, in denen der jeweils zugeordnete Vorsprung exakt geführt ist.

Mit der Erfindung steht somit eine mit geringem Aufwand gießtechnisch herstellbare innenbelüftete Bremsscheibe zur Verfügung, bei der aufgrund der schwimmenden Lagerung vom Reibring am Tragteil sich geringe thermische Spannungen bei einem Bremsvorgang ergeben, so dass die Neigung zur Rissbildung deutlich vermindert ist. Die in die Vorsprünge eingebrachten Durchgangsöffnungen stellen dabei eine gegenüber den bekannten Verbundgusskonstruktionen verbesserte Belüftung und ein dementsprechend verringertes Temperaturniveau beim Bremsvorgang sicher. Die bei einer erfindungsgemäßen Bremsscheibe auftretenden geringen thermischen Spannungen in Verbindung mit dem verringerten Temperaturniveau erlauben eine Reduzierung der thermisch aktiven Reibringmasse, so dass das Gewicht einer erfindungsgemäßen Bremsscheibe insgesamt gegenüber herkömmlichen Scheiben dieser Art weiter reduziert werden kann. Dies gilt insbesondere dann, wenn das Tragteil aus einem Leichtmetallwerkstoff, insbesondere einem Al-Werkstoff hergestellt ist.

Nachfolgend wird die Erfindung anhand einer ein Ausführungsbeispiel darstellenden Zeichnung näher erläutert. Es zeigen jeweils schematisch:

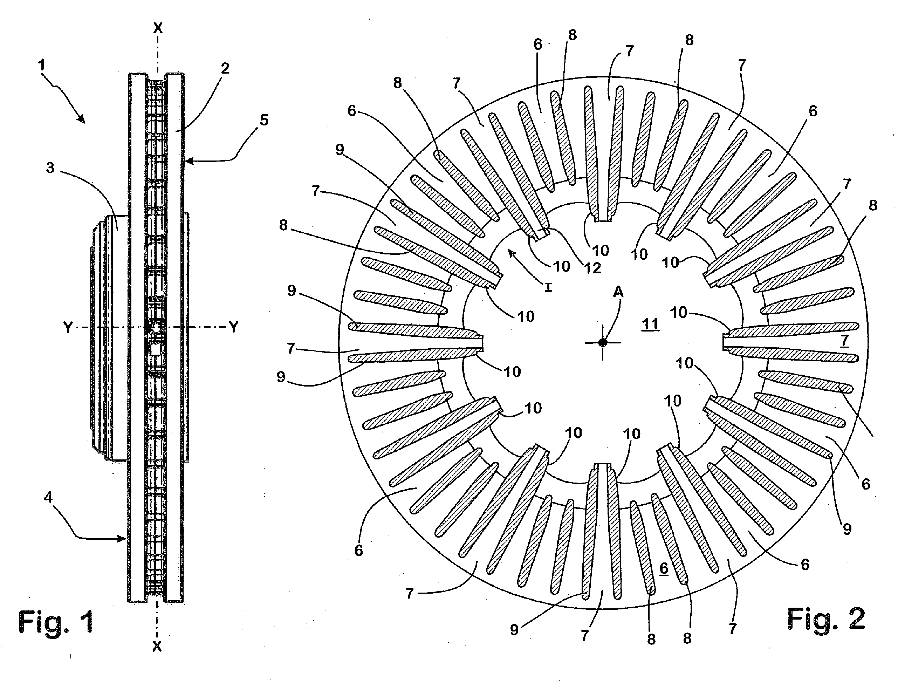

- Fig. 1: eine Bremsscheibe in einer seitlichen Ansicht;
- Fig. 2: den Reibring der in Fig. 1 dargestellten Bremsscheibe in einem Schnitt entlang der in Fig. 1 eingezeichneten Schnittlinie X-X;

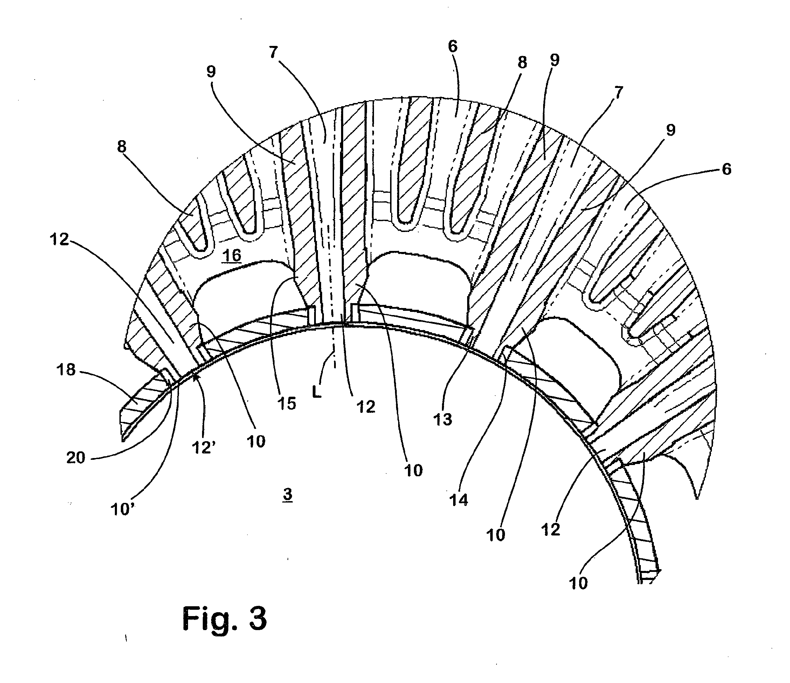

- Fig. 3: einen Ausschnitt der in Fig. 1 dargestellten Bremsscheibe in einem Schnitt entlang der in Fig. 1 eingezeichneten Schnittlinie X-X;

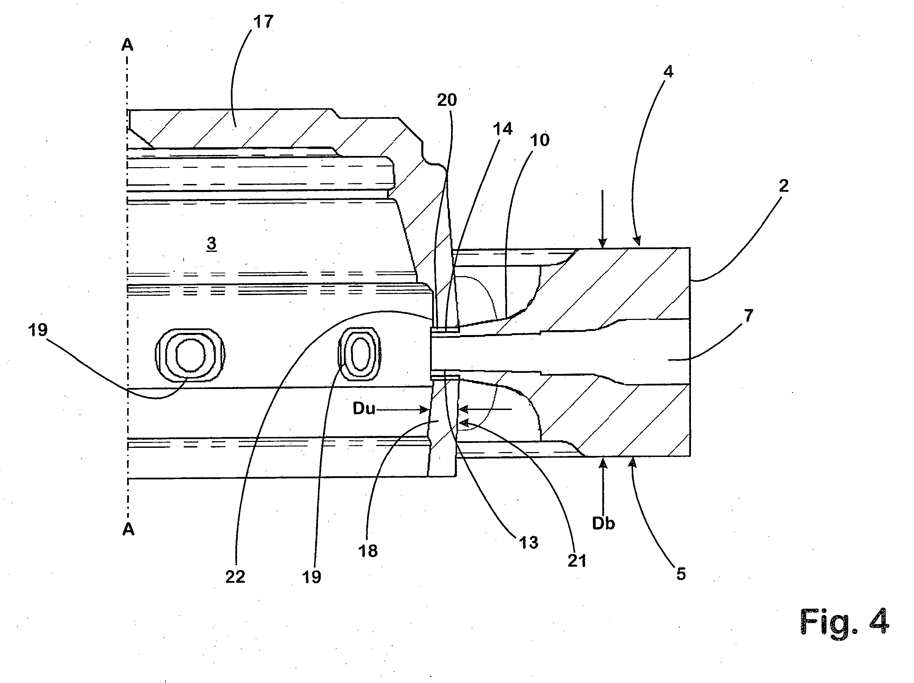

- Fig. 4: einen Ausschnitt der in Fig. 1 dargestellten Bremsscheibe in einem Schnitt entlang der in Fig. 1 eingezeichneten Schnittlinie Y-Y.

Die innenbelüftete Bremsscheibe 1 ist aus einem aus Gusseisen vorgefertigten Reibring 2 und einem an den Reibring 2 angegossenen, aus einer Aluminiumgusslegierung bestehenden Tragteil 3 zusammengesetzt, das mit dem Reibring 2 formschlüssig verbunden und koaxial zu diesem ausgerichtet ist.

Der Reibring 2 weist auf seinen einander gegenüberliegenden Stirnseiten in an sich bekannter Weise jeweils ringförmige Reibflächen 4,5 auf, auf die die Bremsbeläge einer hier nicht dargestellten Scheibenbremseinrichtung eines PKW's wirken.

Zwischen den Stirnflächen 4,5 sind in den Reibring 2 in regelmäßigen Winkelabständen angeordnete, sich radial erstreckende Belüftungskanäle 6,7 eingeformt, die voneinander durch jeweils eine aus dem Material des Reibring 2 bestehende, sich ebenfalls radial erstreckende Wand 8,9 getrennt sind.

Die jeden vierten Belüftungskanal 7 begrenzenden Wände 9 gehen in einen Vorsprung 10 über, der auf der die Ringöffnung 11 umgrenzenden Innenseite I des Reibrings 2 radial in Richtung der Drehachse A der Bremsscheibe 1 vorstehen. Bei der Bremsscheibe 1 sind auf diese Weise zwölf zapfenartig vorstehende Vorsprünge 10 in regelmäßigen Winkelabständen um die Drehachse A-verteilt an dem Reibring 2 ausgebildet.

In die Vorsprünge 10 ist jeweils ein Durchgangskanal 12 eingeformt, der sich koaxial zur Längsachse L des jeweiligen Vorsprungs 10 erstreckt und stufenlos in denjenigen Belüftungskanal 7 übergeht, der durch die sich an den jeweiligen Vorsprung 10 anschließenden Wände 9 der Bremsscheibe 1 seitlich begrenzt ist. Die Mündungsöffnung 12' des Durchgangskanals 12 ist jeweils auf der freien Stirnfläche 10' der Vorsprünge 10 platziert.

Jeder der Vorsprünge 10 weist einen Endabschnitt 13 auf, an dem durch eine spanende Bearbeitung ein umlaufender Absatz 14 ausgebildet ist. Die Umfangsfläche des Absatzes 14 der Vorsprünge 10 weist infolgedessen jeweils eine einwandfrei zylindrische Form auf. Außerhalb ihres Endabschnitts 13 besitzen die Vorsprünge 10 im Schnitt quer zu ihrer Längsachse L eine elliptische Form. Dabei verjüngen sich die Vorsprünge 10 ausgehend von ihrer den jeweiligen Wänden 9 zugeordneten Basis 15 in Richtung ihres frei vorstehenden Endabschnitts 13. Die verbreiterte Basis in Kombination mit der elliptischen Querschnittsform gewährleistet eine besonders hohe Widerstandsfähigkeit der Vorsprünge 10 gegenüber ihren bei einem Bremsvorgang auftretenden mechanischen Belastungen.

Zu beachten ist, dass vorliegend sowohl die Anzahl der Belüftungskanäle 6,7 als auch die entsprechende Anzahl der Wände 8,9 sowie die Anzahl von Vorsprüngen 10 rein beispielhaft zu verstehen ist, da die in der Praxis konkret gewählte Anzahl von Vorsprüngen 10 jeweils abhängt von den bei einem Bremsvorgang tatsächlich auftretenden Belastungen. Dementsprechend wird in der Praxis die Anzahl und Dimensionierung der zwischen den in die Durchgangskanäle 12 der Vorsprünge 10 übergehenden Belüftungskanälen 7 angeordneten Belüftungskanäle 6 entsprechend der bei einem Bremsvorgang abzuführenden Wärme sowie entsprechend der dabei auftretenden mechanischen Belastungen des Reibrings 2 gewählt werden. Im Hinblick auf eine größtmögliche Gewichtsreduzierung wird dabei grundsätzlich angestrebt werden, die Anzahl der Vorsprünge 10 so gering wie möglich zu halten. Dem selben Zweck kann es dienen, wenn die Belüftungskanäle 6,7 so groß wie möglich bzw. die Stärke der sie seitlich begrenzenden Wände 8,9 so gering wie möglich ausgelegt werden.

Zur Optimierung des Luftein- bzw. -austritts in die Belüftungskanäle 6 ist in die zwischen den Vorsprüngen 10 vorhandenen Flächenabschnitte der Innenseite I des Reibrings 2 jeweils eine Nut 16 eingeformt, in die die Belüftungskanäle 6 mit ihren innenseitigen Mündungsöffnungen übergehen.

Das Tragteil 3 ist topfförmig ausgebildet und weist einen zentralen, normal zur Drehachse A ausgerichteten und kreisrunden Halteabschnitt 17 auf, in den hier nicht sichtbare Öffnungen zum Durchführen von Befestigungsschrauben eingebracht sind. Um den Halteabschnitt 17 läuft eine Umfangswand 18 um, deren Wanddicke Du lediglich einen kleinen Bruchteil der Dicke Db der Bremsscheibe 1 beträgt.

In die Umfangswand 18 sind in den Winkelabständen der Vorsprünge 10 entsprechenden Winkelabständen Ausnehmungen 19 eingeformt. Jede der Ausnehmungen 19 ist dabei von einer Buchse 20 umgrenzt, die in das Aluminiumgussmaterial des Tragteils 3 eingegossen sind.

Die Buchsen 20 bestehen dabei aus einem Stahlwerkstoff, dessen Beständigkeit gegen mechanische Belastungen um ein Vielfaches höher ist als die Belastbarkeit des Al-Materials, aus dem das Trägerteil 3 gegossen ist. Mit ihrer dem Reibring 2 zugeordneten Stirnseite sind die Buchsen 20 bündig zur Außenfläche 21 der Umfangswand 18 ausgerichtet, während sie auf der Innenseite des Tragteils 3 um ein geringes Übermaß in Richtung der Drehachse A über die Innenfläche 22 der Umfangswand 18 vorstehen.

In den von den Buchsen 20 umgebenen Ausnehmungen 19 stecken die Endabschnitte 13 der Vorsprünge 10 mit ihren Absätzen 14. Die Höhe der Absätze 14 entspricht dabei mindestens der Dicke der Buchsen 20, so dass die freien Stirnflächen 10' im kalten Zustand jeweils mindestens bündig zur innenseitigen Stirnfläche der Buchsen 20 des Trägerteils 3 ausgerichtet sind. Der Außendurchmesser der Absätze 14 der Vorsprünge 10 ist höchstens gleich dem Innendurchmesser der Ausnehmungen 19, so dass die Vorsprünge 10 mit ihren Endabschnitten 13 weitestgehend spielfrei und im Wesentlichen ausschließlich formschlüssig in die ihnen jeweils zugeordnete Ausnehmung 19 greifen.

Kommt es im praktischen Einsatz zu einer Erwärmung des Reibrings 2, kann dieser sich somit in radialer Richtung ungehindert ausdehnen. Gleichzeitig ist dadurch, dass über den gesamten Umfang des Reibrings 2 verteilt Belüftungskanäle 6,7 ausgebildet sind, sichergestellt, dass die bei einer Bremsung entstehende Wärme schnell und gleichmäßig aus dem Reibring 2 abgeführt wird. Aufgrund dessen, dass dabei ebenfalls Luft durch die mit den Durchgangskanälen 12 der Vorsprünge 10 verbundenen Belüftungskanäle 7 strömen kann, ist sichergestellt, dass es auch im Bereich der Ankopplung des Reibrings 2 an das Tragteil 3 zu keiner Überhitzung kommt.

Für die Herstellung der Bremsscheibe 1 wird zunächst der Reibring 2 mit seinen Vorsprüngen 10, den Durchgangskanälen 12 und den Belüftungskanälen 6,7 aus Eisengusswerkstoff vorgegossen. Anschließend werden die Absätze 14 an den Endabschnitten 13 der Vorsprünge 10 durch einen spanenden Bearbeitungsvorgang erzeugt.

Auf die fertig bearbeiteten Absätze 14 der Vorsprünge 10 werden dann die Buchsen 20 aufgesetzt. Der so vorbereitete Reibring 2 wird daraufhin in eine hier nicht gezeigte Gießform gelegt, in der anschließend das Tragteil 3 an den Reibring 2 angegossen wird. Das Al-Gußmaterial des Tragteils 3 umgibt dabei die Buchsen 20, so dass diese nach dem Erstarren fest in dem Tragteil 3 gehalten sind. Aufgrund dessen, dass die Buchsen 20 beim Angießen des Tragteils 3 auf den Vorsprüngen 10 sitzen, ist auf einfache Weise gewährleistet, dass die Buchsen 20 einwandfrei lagerichtig im fertigen Tragteil 3 positioniert sind.

### BEZUGSZEICHEN

- 1: Bremsscheibe
- 2: Reibring
- 3: Tragteil
- 4,5: Reibflächen des Reibrings 2
- 6,7: Belüftungskanäle
- 8,9: die Belüftungskanäle 6,7 seitliche begrenzende Wände
- 10: Vorsprünge
- 10': Stirnfläche des jeweiligen Vorsprungs 10
- 11: Ringöffnung
- 12: Durchgangskanal
- 12': Mündungsöffnung des jeweiligen Durchgangskanals 12
- 13: Endabschnitt des jeweiligen Vorsprungs 10
- 14: Absatz des jeweiligen Vorsprungs 10
- 15: Basis des jeweiligen Vorsprungs 10
- 16: Nut
- 17: Halteabschnitt des Tragteils 3
- 18: Umfangswand des Tragteils 3
- 19: Ausnehmungen
- 20: Buchse
- 21: Außenfläche der Umfangswand 18
- 22: Innenfläche der Umfangswand 18
- A: Drehachse der Bremsscheibe 1
- Du: Wanddicke der Umfangswand 18
- Db: Dicke der Bremsscheibe 1
- I: Innenseite des Reibrings
- L: jeweilige Längsachse der Vorsprünge 10

## Patentansprüche

1. Bremsscheibe für eine Scheibenbremse, welche insbesondere zum Einsatz an Kraftfahrzeugen bestimmt ist, mit einem Reibring (2) als ernsten Verbindungspartner und einem Trägerteil (3) als zweiten Verbindungspartner, wobei die Verbindungspartner (2,3) über radial ausgerichtete Vorsprünge (10) drehfest miteinander verbunden sind, die einstückig an einen der Verbindungspartner (2,3) angeformt sind und formschlüssig in korrespondierend geformte Ausnehmungen (19) des jeweils anderen Verbindungspartners (3,2) greifen, wobei mindestens einer der Vorsprünge einen Durchgangskanal (12) aufweist und wobei in dem Reibring (2) mindestens ein Belüftungskanal (7) zum Ableiten von Umgebungsluft aus oder Einleiten von Umgebungsluft in den Durchgangskanal (12) des jeweiligen Vorsprungs (10) ausgebildet ist,d a **durch gekennzeichnet, dass** die Ausnehmungen (19) jeweils von einer Buchse (20) umgeben sind, die in den Verbindungspartner (2,3) eingegossen ist, der die Ausnehmungen (19) aufweist.

2. Bremsscheibe nach Anspruch 1, **dadurch gekennzeichnet, dass** die Vorsprünge (10) an den Reibring (2) angeformt sind.

3. Bremsscheibe nach einem der voranstehenden Ansprüche, **dadurch gekennzeichnet, dass** jeder der Vorsprünge (10) einen Durchgangskanal (12) aufweist.

4. Bremsscheibe nach einem der Ansprüche 2 oder 3, **dadurch gekennzeichnet, dass** die den mit den Durchgangskanälen (12) versehenen Vorsprüngen (10) zugeordneten Ausnehmungen (19) des Tragteils (3) zum Durchleiten von Umgebungsluft mindestens eine Öffnung aufweisen, die mit dem Durchgangskanal (12) der Vorsprünge (10) verbunden ist.

5. Bremsscheibe nach einem der voranstehenden Ansprüche, **dadurch gekennzeichnet, dass** die den mit den Durchgangskanälen (12) versehenen Vorsprüngen (10) zugeordneten Ausnehmungen (19) als Durchbrüche ausgebildet sind.

6. Bremsscheibe nach Anspruch 5, **dadurch gekennzeichnet, dass** die freie Länge mindestens der mit den Durchgangskanälen (12) versehenen Vorsprünge (10) derart bemessen ist, dass die betreffenden Vorsprünge (10) durch die Ausnehmungen (19) greifen.

7. Bremsscheibe nach Anspruch 6, **dadurch gekennzeichnet, dass** die dem Tragteil (3) zugeordnete, auf der freien Stirnseite (10') der Vorsprünge (10) angeordnete Mündungsöffnung (12') ihres jeweiligen Durchgangskanals (12) außerhalb der Ausnehmung (19) angeordnet ist.

8. Bremsscheibe nach einem der voranstehenden Ansprüche, **dadurch gekennzeichnet, dass** die Vorsprünge (10) eine kreisrunde Querschnittsform aufweisen.

9. Bremsscheibe nach einem der Ansprüche 1 bis 7, **dadurch gekennzeichnet, dass** die Vorsprünge (10) eine elliptische Querschnittsform aufweisen.

10. Bremsscheibe nach einem der voranstehenden Ansprüche, **dadurch gekennzeichnet, dass** die jeweiligen Durchgangskanäle (12) der Vorsprünge (10) koaxial zur Längsachse (L) der Vorsprünge (10), angeordnet sind.

11. Bremsscheibe nach einem der voranstehenden Ansprüche, **dadurch gekennzeichnet, dass** die Vorsprünge (10) an ihrem freien Endabschnitt (13) einen umlaufenden Absatz (14) mit einer spanend bearbeiteten Umfangsoberfläche aufweisen.

12. Bremsscheibe nach einem der voranstehenden Ansprüche, **dadurch gekennzeichnet, dass** der Reibring (2) aus Eisenguss und das Tragteil (3) aus Aluminiumguss hergestellt sind, die an den Reibring (2) angegossen sind.

13. Bremsscheibe nach einem der Ansprüche 2 bis 12, **dadurch gekennzeichnet, dass** das Tragteil (3) topfförmig ausgebildet ist und die Ausnehmungen (19) in die umlaufende Wand (18) des Tragteils (3) eingeformt sind.

## Claims

1. Brake disk for a disk brake, intended in particular for use on motor vehicles, with a friction ring (2) as first connection partner and a carrier part (3) as second connection partner, wherein the connection partners (2, 3) are connected to one another for co-rotation by radially-oriented projections (10), which are formed as single pieces onto one of the connection partners (2, 3) and engage in positive fit in correspondingly shaped cut-out apertures (19) of the respective other connection partner (3, 2), wherein at least one of the projections has a passage channel (12), and wherein in that at least one ventilation channel (7) is formed in the friction ring (2) for conducting away ambient air or for introducing ambient air into the passage channel (12) of the individual projection (10), **characterised in that** the cut-outs (19) are surrounded in each case by a sleeve (20), cast into the connection partner (2, 3) which has the cut-outs (19).

2. Brake disk according to claim 1, **characterised in that** the projections (10) are formed at the friction ring (2).

3. Brake disk according to either of the preceding claims, **characterised in that** each of the projections (10) has a passage channel (12).

4. Brake disk according to either of claims 2 and 3, **characterised in that** the cut-outs (19) of the carrier part (3) allocated to the projections (10) provided with the passage channels (12) have at least one opening for the conducting of ambient air, which is connected to the passage channel (12) of the projections (10).

5. Brake disk according to any one of the preceding claims, **characterised in that** the cut-outs (19) allocated to the projections (10) provided with the passage channels (12) are formed as break-throughs.

6. Brake disk according to claim 5, **characterised in that** the free length of at least the projections (10) provided with the passage channels (12) is dimensioned in such a way that the projections (10) concerned engage through the cut-outs (19).

7. Brake disk according to claim 6, **characterised in that** the mouth aperture (12') of the individual passage channel (12) arranged on the free face side (10') of the projections (10) facing the carrier part (3) is arranged outside the cut-out (19).

8. Brake disk according to any one of the preceding claims, **characterised in that** the projections (10) have a circular cross-section shape.

9. Brake disk according to any one of Claims 1 to 7, **characterised in that** the projections (10) have an elliptical cross-section shape.

10. Brake disk according to any one of the preceding claims, **characterised in that** the individual passage channels (12) of the projections (10) are arranged coaxially to the longitudinal axis (L) of the projections (10).

11. Brake disk according to any one of the preceding claims, **characterised in that** the projections (10) have at their free end sections (13) a circumferential shoulder (14) with a circumferential surface formed by machining with removal of material.

12. Brake disk according to any one of the preceding claims, **characterised in that** the friction ring (2) is manufactured from cast iron and the carrier part (3) is manufactured from cast aluminium, which are cast onto the friction ring (2).

13. Brake disk according to any one of Claims 2 to 12, **characterised in that** the carrier part (3) is formed in pot shape and the cut-outs (19) are formed into the circumferential wall (18) of the carrier part (3).

## Revendications

1. Disque de frein pour un frein à disque qui est destiné notamment à l'utilisation dans des véhicules automobiles, avec une bague de friction (2) comme premier partenaire de liaison et un élément porteur (3) comme second partenaire de liaison, où les partenaires de liaison (2, 3) sont reliés entre eux en solidarité de rotation au moyen de saillies (10) orientées radialement qui sont formées d'un seul tenant sur un des partenaires de liaison (2, 3) et qui s'engagent positivement dans des évidements (19), formés d'une manière correspondante, de l'autre partenaire de liaison respectif (3, 2), où au moins une des saillies présente un canal traversant (12) et qu'au moins un canal d'aération (7) est formé dans la bague de friction (2) pour évacuer de l'air ambiant du canal traversant (12) de la saillie respective (10), ou pour introduire de l'air ambiant dans ce canal (12), **caractérisé en ce que** les évidements (19) sont entourés respectivement par un manchon (20) qui est intégré par moulage dans le partenaire de liaison (2, 3) qui présente les évidements (19).

2. Disque de frein selon la revendication 1, **caractérisé en ce que** les saillies (10) sont formées au niveau de la bague de friction (2).

3. Disque de frein selon une des revendications précédentes, **caractérisé en ce que** chaque saillie (10) présente un canal traversant (12).

4. Disque de frein selon une des revendications 2 ou 3, **caractérisé en ce que** les évidements (19) de l'élément porteur (3) associés aux saillies (10), prévues avec le canal traversant (12), étant destinés à faire passer l'air ambiant présentent au moins une ouverture reliée avec le canal traversant (12) de la saillie (10).

5. Disque de frein selon une des revendications précédentes, **caractérisé en ce que** les évidements (19) associés aux saillies (10) prévues avec les canaux traversants (12) sont formés que par-break.

6. Disque de frein selon la revendication 5, **caractérisé en ce que** la longueur libre d'au moins les saillies (10) prévues avec les canaux traversants (12) est mesurée de telle sorte que les saillies (10) concernées s'engagent dans les évidements (19).

7. Disque de frein selon la revendication 6, **caractérisé en ce que** l'ouverture d'embouchure (12') du canal traversant respectif (12), agencée sur le côté avant libre (10') de les saillies (10) et associée à l'élément porteur (3), est agencé à l'extérieur de l'évidemment (129).

8. Disque de frein selon une des revendications précédentes, **caractérisé en ce que** les saillies (10) présentent une forme de section transversale circulaire.

9. Disque de frein selon une des revendications de 1 à 7, **caractérisé en ce que** les saillies (10) présentent une forme de section transversale elliptique.

10. Disque de frein selon une des revendications précédentes, **caractérisé en ce que** les canaux traversants respectifs (12) des saillies (10) sont agencés de manière coaxiale par rapport à l'axe longitudinal (L) des saillies (10).

11. Disque de frein selon une des revendications précédentes, **caractérisé en ce que** les saillies (10) présentent au niveau de leur partie d'extrémité libre (13) un épaulement périphérique (14) avec une surface périphérique usinée.

12. Disque de frein selon une des revendications précédentes, **caractérisé en ce que** la bague de friction (2) est produite en fonte et l'élément porteur (3) est produit en fonte d'aluminium et les deux sont surmoulés sur la bague de friction (2).

13. Disque de frein selon une des revendications de 2 à 13, **caractérisé en ce que** l'élément porteur (3) est conçu en forme de pot et les évidements (19) sont insérés par moulage dans la paroi périphérique (18) de l'élément porteur (3).
